# EUROPEAN PATENT SPECIFICATION

(11) **EP 3 996 249 B1**
(45) Date of publication and mention of the grant of the patent: **11.11.2026**
(21) Application number: 21215724.2
(22) Date of filing: 30.05.2014
(51) Int. Cl.: H02K 1/27, H02K 1/17, H02K 21/12, H02K 3/46, H02K 21/28, H02K 21/22, H02K 21/24, H02K 1/14, H02K 1/18, H02K 21/14, H02K 1/278, H02K 1/2786, H02K 1/2793, H02K 1/2706

(54) **FLUX MACHINE**
STRÖMUNGSMASCHINE
MACHINE À FLUX

(30) Priority: 23.01.2014 US 201414162611
(43) Date of publication of application: 11.05.2022
(62) Document number(s) of the earlier application(s) in accordance with Art. 76 EPC: 14879806.9 / 3 120 439
(73) Proprietor: Clearwater Holdings, Ltd., Carson City, NV 89701 (US)
(72) Inventor: Klontz, Keith, Seminole, 33777 (US); Li, Haodong, Seminole, 33772 (US)
(74) Representative: Loo, Chi Ching

(56) References cited:
- US-A1- 2004 239 199
- US-A1- 2007 228 860

## Description

### RELATED APPLICATIONS

In full or in part, this application describes the same apparatus and method as presented in co-pending utility application 14/162,611, filed on January 23, 2014, and provisional application 61/756,404, filed on January 24, 2013, and claims international date priority thereof as a Patent Cooperation Treaty application.

### BACKGROUND

The industrial field of this disclosure relates to electric motors and generators and their methods of construction and operation. In particular this disclosure is directed to a flux machine (FM) that may be operated as a motor or generator. Efficiency in motors and generators is critically important to commercial feasibility. Therefore arrangement of the magnets and coils that generate the flux and electromotive force has a large impact on the operating efficiency of a motor and generator. As more essential products, including vehicles, are moving to electricity, there is a significant need for a motor and generator with greater efficiency. US2004/239199A1 discloses a dual-rotor, radial-flux, toroidally-wound, permanent-magnet machine. US2007/228860A1 discloses a three-gapped motor with outer rotor and stationary shaft.

### BRIEF DESCRIPTION OF THE DRAWINGS

Figure 1 is an example proximal perspective view of a flux machine described, illustrated, and claimed herein;
Figure 2 is an example distal perspective view thereof;
Figure 3 is an example proximal perspective expanded view in accordance with Fig. 1;

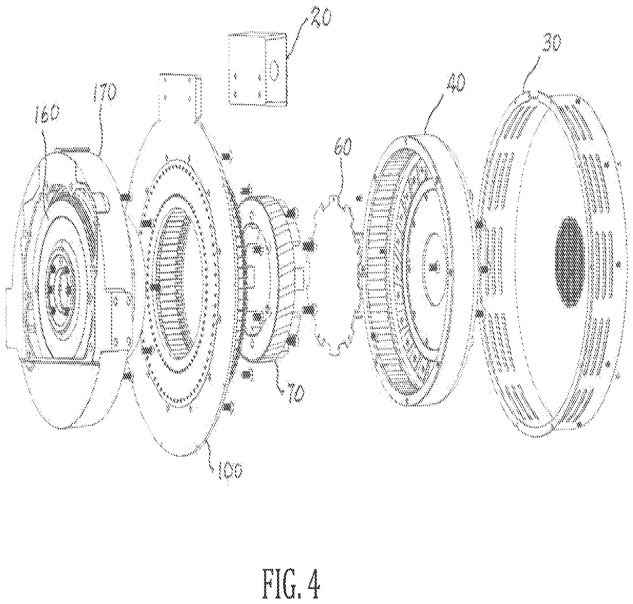

Figure 4 is an example distal perspective expanded view in accordance with Fig. 2;
Figure 5 is an example vertical section view taken at A- A in Fig. 1 and passing through a central rotational axis;
Figure 6 is an example distal perspective view of an outer rotor-magnet assembly thereof;
Figure 7 is an example proximal perspective view of an inner rotor-magnet assembly thereof;
Figure 8 is an expanded view of Fig. 7;
Figure 9 is an example proximal perspective view of a radial fan thereof;
Figure 10 is an example proximal perspective view of a stator assembly thereof with only a small number of representative core and coil elements shown;
Figure 11 is an example perspective expanded view of one core and coil assembly thereof;
Figure 12 is an example perspective distal view of a full complement of core- coil assemblies thereof showing coil wires routed to a circumventing wire harness; and
Figure 13 is an example electrical wiring diagrams of a 12 pole, 2-parallel star connection diagram in accordance with the present disclosure.

Like reference symbols in the drawing figures indicate like elements.

### DETAILED DESCRIPTION

A flux machine (F 10) that may function as a motor or generator has been developed that increases efficiency significantly in laboratory testing. This new design that is disclosed herein relies on a novel arrangement of magnets and co ls that produces superior flux and therefore is more efficient in operation. The apparatus described herein Is an electric motor-generator of a type generally referred to in the art as a "flux machine" (FM 10). In some embodiments, the flux machine operates as a longitudinal flux machine, In other embodiments, the machine operates as a transverse flux machine (TFM). In still other embodiments the flux machine may be a hybrid longitudinal and transvers flux machine. For example, in recent years transverse flux machines have found favor in a wide range of applications. Whereas in standard electric motors, the electromagnetic force vector is parallel to its magnetic flux lines, in TFM's the electromagnetic force vector is perpendicular to the magnetic flux lines. The TFM design allows the pole number to be increased without reducing the magnetomotive force per pole, and is therefore capable of producing power densities higher than in a conventional machine, A TFM with a large number of poles and short current passages is attractive because a high torque/weight ratio, a high power/weight ratio and low copper losses are achievable.

An arrangement of coils and magnets has been developed that allows flux to be separately directed toward three different sides of the coils or coil assemblies. There are two magnets that are oriented with poles facing inward or outward to direct flux in a radial direction on opposite sides of the coils, and a third that has poles facing axially, to direct flux in an axial direction on a third side of the coils. Additionally, the coils may be oriented so that the windings and current flows in a plane that is perpendicular to a vector pointing in an established circumferential direction of motion. This arrangement allows the three magnets to each be adjacent to a different side of the coils but since the coil frame is in a plane perpendicular to the plane of motion, each magnet only interacts with one of the sides of the coils. This allows three magnets to simultaneously interact with the coils providing a superior flux inducing arrangement.

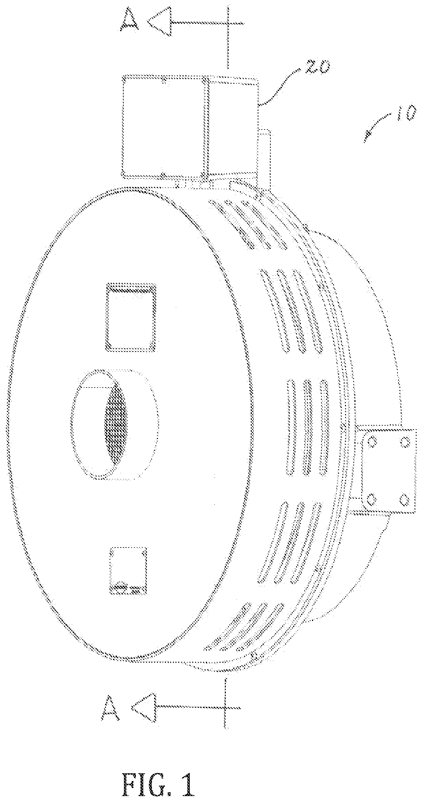

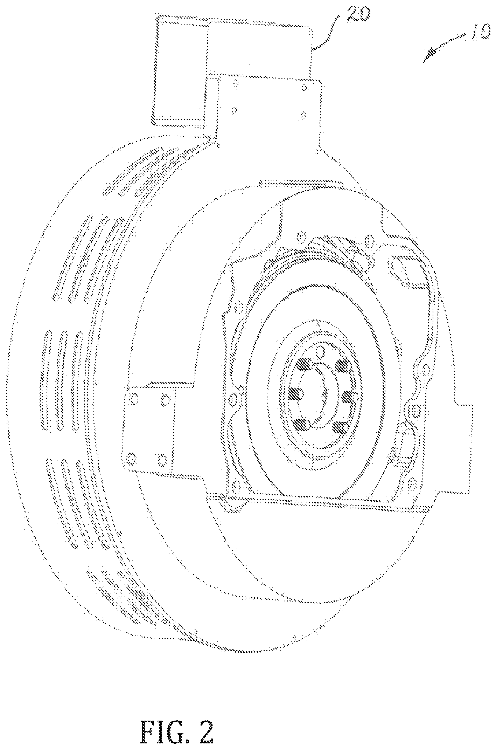

Figs. 1 and 2 shows an embodiment of the FM 10 which may be generally circular in shape and relatively short axially. In other embodiments, it also may be relatively longer axially, linear, or have other suitable configurations. Electrical connections may be made to FM 10 within a connection box 20 shown on top and a mechanical engagement with the FM 10 may be made distally. In this description a "distal" view or element is as seen from the rear- (Fig, 4) and a "proximal" view or element is as seen from the front (Fig, 3) of the machine. Alternate mechanical and electrical interfacing may be employed.

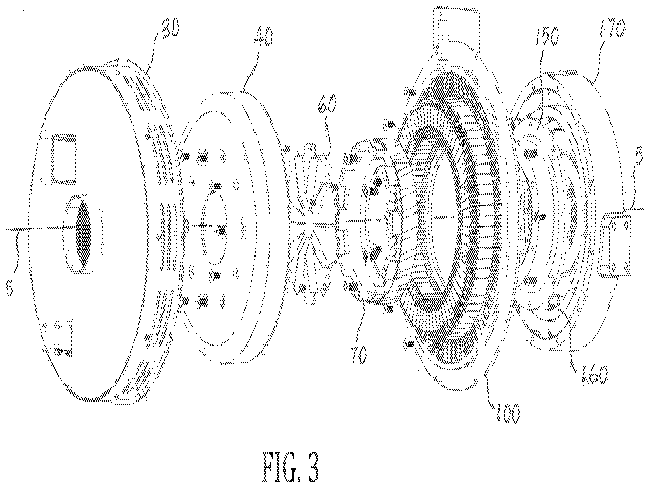

Fig. 3 illustrates the several components and sub-assemblies of FM 10 according to one embodiment, showing such items in the relative respective positions which they occupy during machine operation. Moving from left to right in Fig. 3 shown are: shroud 30, outer rotor-magnet assembly 40, fan 60, inner rotor-magnet assembly 70, stator assembly 100, rotor hub 150, flywheel 160, and flywheel housing 170. Flywheel 160 is not a part of FM 10 but is shown and described to enable an understanding of one manner by which FM 10 may be mechanically engaged for being driven as an electrical generator or for producing useful rotational output work as an electrical motor. Shown also in Fig. 3 are the common hardware screws which may be used to secure the several components and sub-assemblies together as a completed and assembled machine. Any other suitable attachment means may be used in place of screws to secure the several components and sub-assemblies together. All of the above identified parts of FM 10 are aligned axially on common axis 5 which is also the center of rotation of the rotor, that is: elements 40, 60, 70, and 150. Fig, 4 is a distal view of the same elements.

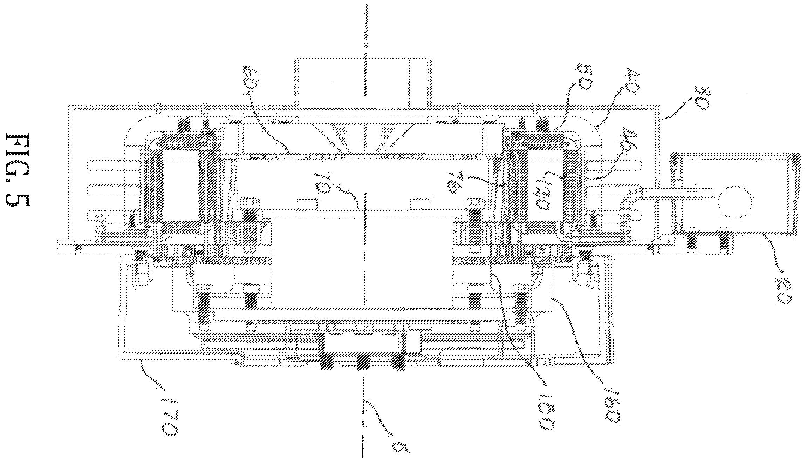

Fig. 5 shows an embodiment of a FM 10 in vertical cross section illustrating an embodiment of how rotor hub 150 is joined to flywheel 160, inner rotor-magnet assembly 70 is joined to rotor hub 150, fan 60 to inner rotor- magnet assembly 70; outer rotor-magnet assembly 40 to inner rotor-magnet assembly 70; stator assembly 100 to flywheel housing 170, and shroud 30 to stator assembly 100. Fig. 5 also shows the locations of permanent magnets 46, 50, and 76 as well as core-coil assembly 120. Alternative embodiments and constructions may be applied, including the selection and connectivity of the various components described herein. For instance, in some embodiments, the rotor and stator may be reversed, with appropriate electrical and mechanical connectivity adjusted.

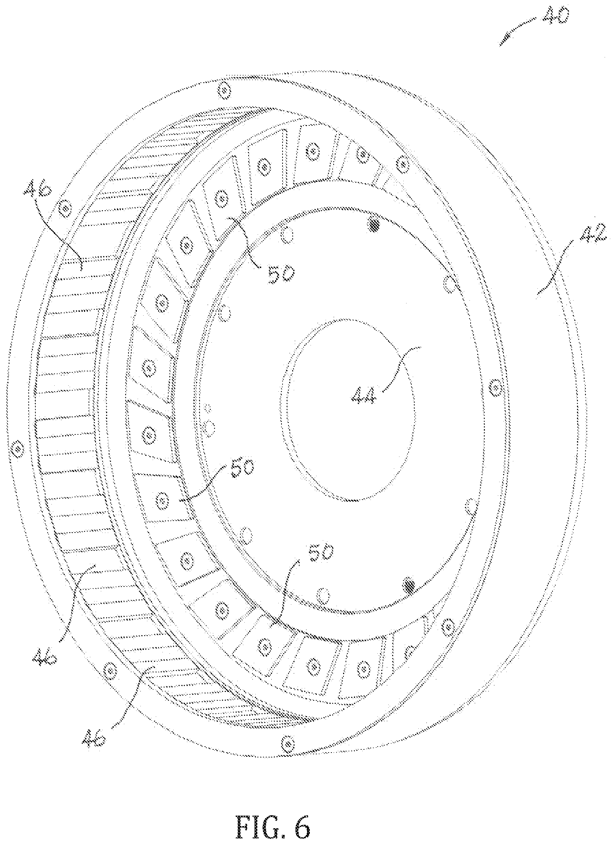

Referring now to Fig. 6, it is shown that in some embodiments the outer rotor- magnet assembly 40 may have a cylindrical wall 42 and an end wall 44. Additionally, the outer rotor magnet assembly may be made of any other suitable configuration of rings, cylinders or other suitable connective components. Mounted on the cylindrical wall 42 may be OD radial magnets 46 and mounted on the end wall 44 may be axial magnets 50. The OD radial magnets 46 may be mounted on an inner surface of the cylindrical wall 42, an outer surface, in slots or spaces on the cylindrical wall 42, or any other suitable mounting. The axial magnets may be mounted on an inwardly facing surface 48 of an end wall 44, an outwardly facing surface, in slots or spaces in an end wall 44, or any other suitable arrangement. Each of the sets of magnets 46 and 50 may be arranged circularly or in other embodiments linearly. The magnets 46 and 50 may have planar pole faces producing flux lines normal thereto so that magnets 46 produce a radial flux and magnets 50 produce an axial flux. The magnets 46 and 50 are secured to their respective surfaces or any other suitable portions by a bonding agent such as an epoxy type or otherwise, and may be additionally secured by common hardware such as threaded screws installed into end wall 44 as shown or other suitable methods or devices.

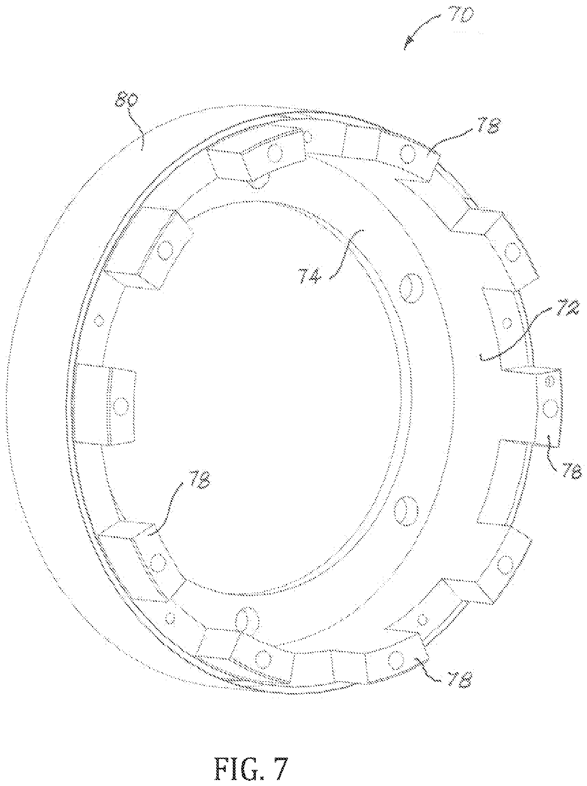

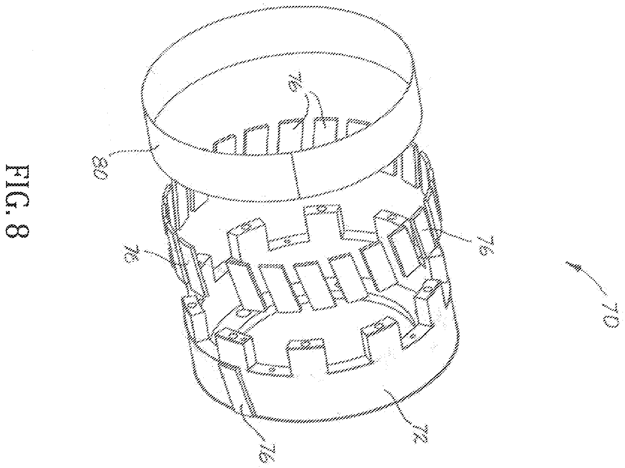

Referring now to Figs. 7 and 8, it is shown that inner rotor-magnet assembly 70 may be a cylinder having a cylindrical outer wall 72 and an annular internal flange 74 at a distal end of outer wall 72. In other embodiments, the inner/rotor/stator may be construction of any suitable arrangement of materials, rings, walls, flanges, or connective pieces. Mounted, in a circular arrangement, on an outer surface of outer wall 72 may be ID radial magnets 76. Magnets 76 may also be mounted in spaces or connected with bars or other suitable means known in the art. Magnets 76 may be arc-shaped to coincide with the curved surface of outer wall 72 upon which they are set, and the pole surfaces may be facing outwardly to produce a radially directed magnetic flux. Magnets 76 may also be flat or any other suitable shapes. Magnets 76 may be secured to wall 72 or another suitable portion of the inner rotor/stator assembly 70 by a bonding agent such as an epoxy type or otherwise, and may be additionally secured by common hardware such as screws threaded into wall 72 or otherwise. As shown in Figs. 7 and 8 an external non-ferrous circular cover 80 may be fitted over magnets 76 for improved securement thereof.

Magnets 46, 50, and 76 may be permanent magnets or electromagnets or a combination of both. In other embodiments, the outer and inner rotor-magnet assembly 70 and outer rotor magnet assembly 40 may be combined into a single rotor assembly, or the end wall 44 of the outer rotor magnet assembly may be attached to the inner rotor-magnet assembly 70. Additionally, the stator may be the rotor and the rotor the stator with appropriate adjustments to electrical and mechanical connectivity.

In other embodiments, inner rotor-magnet assembly 70 or outer rotor magnet assembly 40 may include two end walls 44, and with two mutually facing magnets 50 with axially directed flux each connected to one of the end walls 44, and one cylindrical wall 42, with a radial magnet 76 connected to the cylindrical wall 42 with radially directed flux. In this embodiment, the stator coils would be inside the rotor, with axial-radial-axial flux directed to three different sides of the coils. In this embodiment, the coils may be oriented so that current flows in a plane perpendicular to a vector circumferentially directed in the direction of motion.

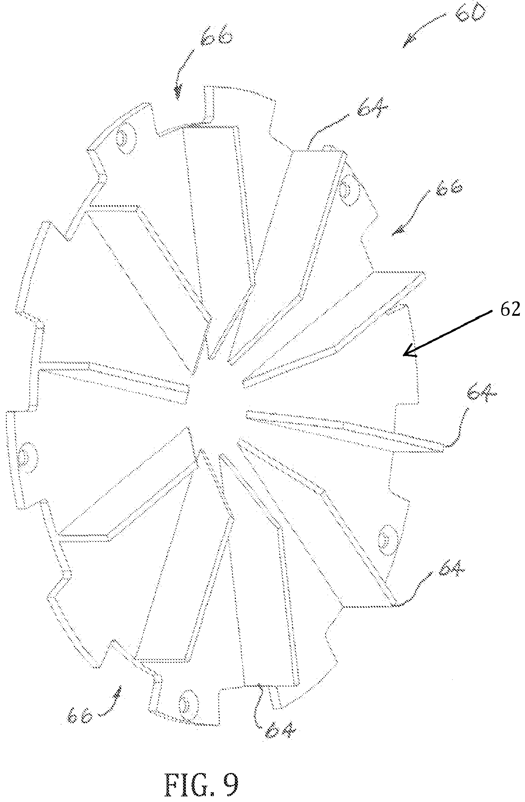

The fan 60 shown in Fig. 9 may be made up of a circular flat plate 62 upon which may be mounted, by welding or otherwise, radial vanes 64. During operation of FM 10 fan 60 may rotate about axis 5 to draw air into the machine axially through screen 31 (Fig. 1) whereby it is redirected radially by the vanes 64 for cooling coils 126 and cores 122 and 124. The air exits through slots 34 in shroud 30 (Fig. 1). As should be understood, fan 60 is engaged with inner rotor-magnet assembly 70 with axial fingers 78 thereof engaged with peripheral slots 66 in plate 62.

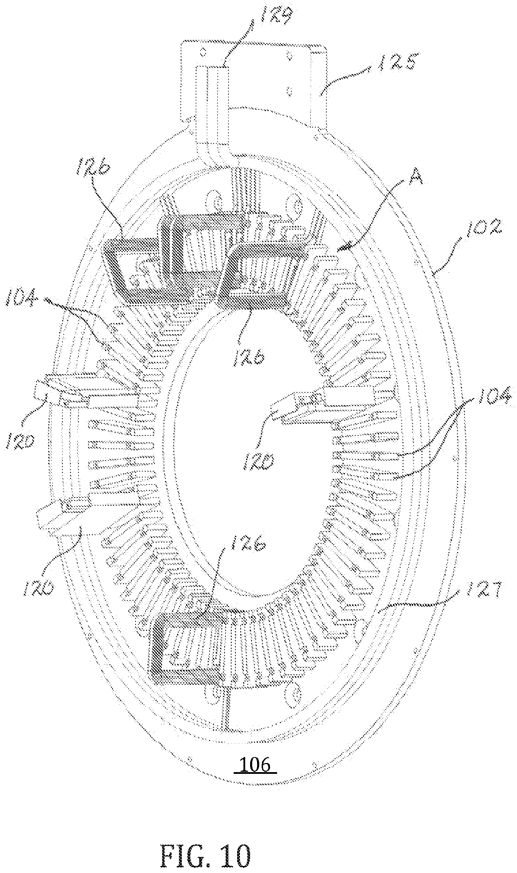

Stator assembly 100 which in one embodiment may function as the rotor of FM 10, may have a metal structural frame shown in Fig. 10 which includes a frame disc 102 incorporating a circular array of mutually spaced-apart radial partitions 104 mounted on a proximal surface 106 of disc 102 as shown. In Fig. 10 several coils 126 are shown in their respective operating positions and are electrically interconnected through circular harness 127 which encircles partitions 104. Wires in harness 127 terminate at three lead conduits 129 adjacent to an electrical box flange 125, the latter being integral with, or attached to disc 102. In some embodiments, channels between adjacent partitions 104 may be used for routing electrical wires of coils 126 as shown at "A." Also shown in Fig. 10 there may be three cores 120. Cores 120 may be permeable cores, composites, laminates, or combinations of laminates and composites, or other suitable core construction.

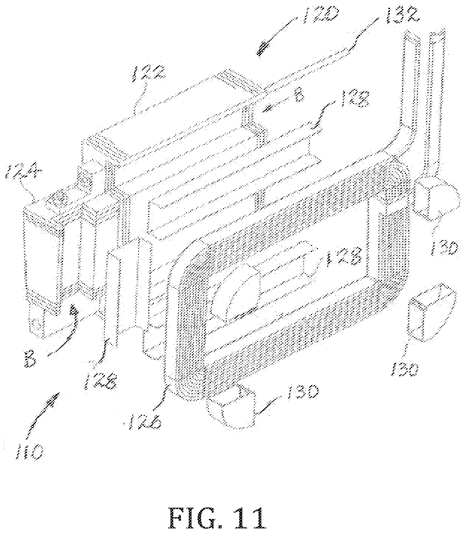

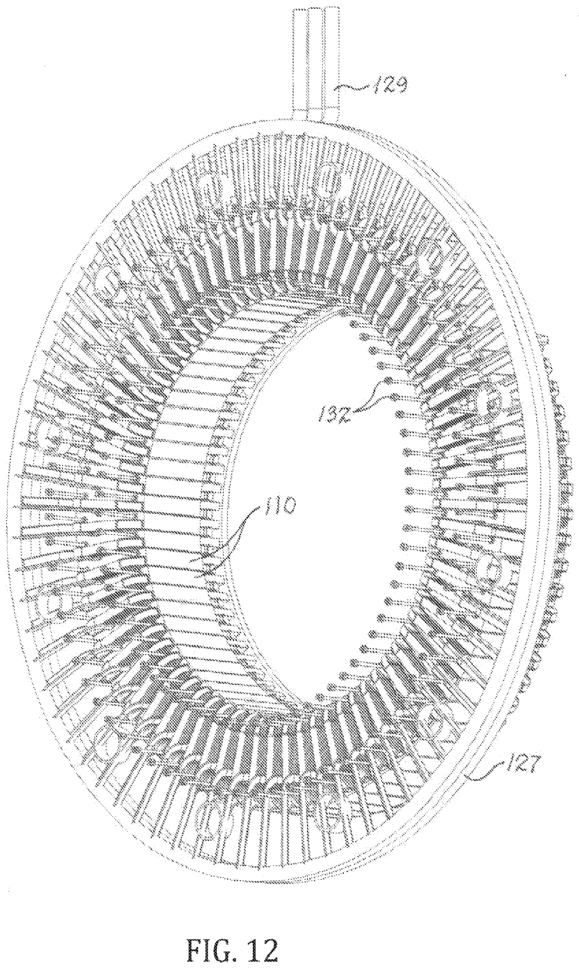

A full complement of core-coil assemblies CCA 110 or coil assemblies, shown in Fig. 12, are mounted as part of stator assembly 100, with each CCA 110 mounted onto one of partitions 104 (Fig. 10). A typical CCA 110 is shown expanded in Fig. 11 illustrating a core 120 made up of two abutting silicon steel lamination stacks, a larger stack 122 with laminations aligned radially when mounted on stator assembly 100, and a smaller stack 124 with laminations aligned axially when so mounted. As shown, stacks 122, 124 are connected together using common hardware, or otherwise, and use common hardware 132 for bolting CCA 110 to frame disc 102 or may be connected through any other suitable means including welding. In other embodiments, the core-coil assemblies 110 may be oval or circular or other suitable shapes.

Stack alignments may be orientated in a direction of magnetic flux from their respective adjacent magnets 46, 50, and 76. Coil 126 may be made up of a flat or rounded, or other shaped copper, or other material of wire wound in a rectangular, oval or circular shape to fit within accommodating channels in core 120 as shown in Fig. 11 at "B." In some embodiments, the flat wire of coil 126 is insulation coated and the several legs of coil 126 are further insulated from core 120 by U-shaped insulating sleeves 128 and tape covered corners 130. As can be seen in Fig. 11. In some embodiments magnetic flux in stacks 122 and 124 will be oriented at right angles to current flowing in the windings of coil 126 and thus produces a force in the third orthogonal direction which is the direction of rotation of the rotor. Fig. 12 is a distal view illustrating a full complement of CCA 110 showing coil wires extending to harness 127 and hardware 132 which penetrates partitions 104 and frame disc 102 (see Fig. 10) for securing all of the CCA 110 as a part of stator assembly 100.

As illustrated in Figure 10, the core-coil assemblies 110 or coil assemblies 110 may be oriented so that the coils 126 are wrapped in a rectangular shape and oriented with respect to the rotor or stator so that the current flows in a plane that is perpendicular to a vector oriented in the circumferential direction of motion or rotation. In the embodiment illustrated in Figure 10, the coils have three sides exposed for interaction with magnetic flux, including two sides exposed for interaction with flux of radial magnets 76 and 46, and one side exposed for interaction with flux of axial magnets 50. These interactions all occur in the same plane, and accordingly, each magnet only interacts with one side of each coil 126. This is advantageous because it allows three magnets to simultaneously interact with the coils and produce flux that contributes to the motive force and/or electricity generation.

When inner rotor-magnet assembly 70 is positioned within the circular arrangement of CCA 110, magnets 76 may be positioned in parallel and adjacent to inwardly facing surfaces of core-coil assemblies 110 and may be spaced apart therefrom by an air gap. When outer rotor-magnet assembly 40 is positioned around the outside of the circular arrangement of CCA 110, magnets 46 may be positioned in parallel with outwardly facing surfaces of stacks 122 and may be spaced apart therefrom by an air gap. It is further clear that when outer rotor- magnet assembly 40 is positioned around the circular arrangement of CCA 110, magnets 50 may be positioned in parallel with outwardly facing surfaces (in the axial direction) of stacks 124 and may be spaced apart therefrom by an air gap. Fig. 5 illustrates the positions of the magnets relative to the coil-core 120. It is clear than that with the sets of magnets 46, 50 and 76 positioned in close proximity to three sides of the sets of CCA 110, an electric current flowing in coils 126 will produce forces in a direction of rotation of the rotor about axis 5.

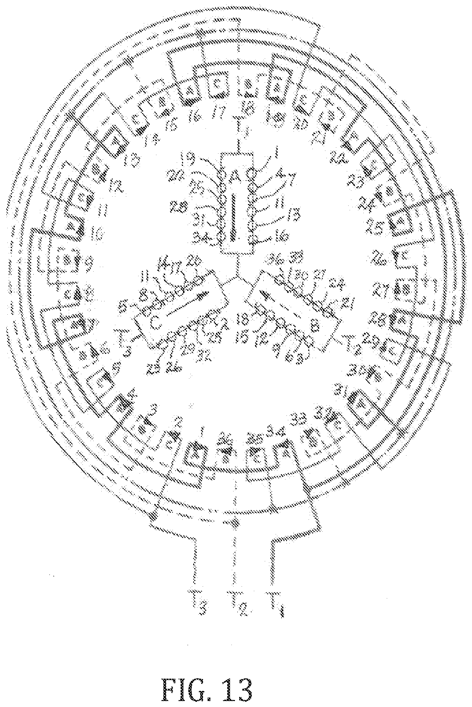

Fig. 13 shows an electrical interconnection that may be made in a 12 pole, 3 phase, 2 parallel star connected version of FM 10. In Fig. 13, the outer circular diagram shows a method of wiring the poles of the three phases, and the inner diagram shows the Y-arrangement indicating which poles are interconnected in a series-parallel interconnection arrangement. FM 10 may be configured with a larger or smaller number of poles and with other electrical arrangements.

Embodiments of the subject apparatus and wiring arrangement have been described herein. Nevertheless, it will be understood that modifications by those of skill in the art may be made without departing from the scope of the appended claims.

## Claims

1. A flux machine (10) comprising:
a stator (100) and a rotor (40, 70);
one of the stator and the rotor having a plurality of electrical core-coil assemblies (110), each of the plurality of electrical core-coil assemblies including a respective core (120) and a corresponding coil (126) wound about the respective core, , wherein the core-coil assemblies are oriented so that the current of the coil primarily flows in a plane that is transverse to a direction of rotation, each core (120) being formed from a first core portion (122) and a second core portion (124), the first core portion (122) including a first plurality of laminations stacked in a first direction, the second core portion (124) including a second plurality of laminations stacked in a second direction generally perpendicular to the first direction, each core (120) being separate and distinct from all of the other cores (120) of the plurality of electrical core-coil assemblies;
the other of the stator and the rotor having a first set of magnets (46, 76), a second set of magnets (50), and a third set of magnets (46, 76), pole faces of the first set of magnets facing toward the plurality of electrical core-coil assemblies in a first radial direction, pole faces of the second set of magnets facing toward the plurality of electrical core-coil assemblies in an axial direction, and pole faces of the third set of magnets facing toward the plurality of electrical core-coil assemblies in a second radial direction, wherein the sets of magnets are arranged such that each core-coil assembly (110) faces a magnet from each set of magnets, wherein magnets facing the same core-coil assembly have the same polarity.

2. The flux machine of claim 1, wherein each corresponding coil is wound about at least a portion of the first core portion and at least a portion of the second core portion, such that the first plurality of laminations and the second plurality of laminations are both at least partially disposed within the corresponding coil.

3. The flux machine of claim 1, wherein the first radial direction and the second radial direction are each generally perpendicular to the axial direction.

4. The flux machine of claim 1, wherein the first radial direction is generally parallel to the second radial direction.

5. The flux machine of claim 1, wherein, for the core of each respective one of the plurality of electrical core-coil assemblies, the first plurality of laminations is coupled to the second plurality of laminations such that all laminations of the first plurality of laminations contact an identical one of the second plurality of laminations.

6. The flux machine of claim 1, wherein the first plurality of laminations of each core defines a first channel, and wherein a first portion of each coil is at least partially disposed within the first channel of its core.

7. The flux machine of claim 6, wherein the second plurality of laminations of each core defines a second channel, and wherein a second portion of each coil is at least partially disposed within the second channel of its core.

8. The flux machine of claim 7, wherein the second plurality of laminations of each core defines a third channel, and wherein a third portion of each coil is at least partially disposed within the third channel of its core.

9. The flux machine of claim 8, wherein the first channel defined by the first plurality of laminations is generally perpendicular to the second channel and the third channel defined by the second plurality of laminations.

10. The flux machine of claim 1, wherein the first core portion of each core includes (i) a first peripheral portion disposed about a first portion of a periphery of its corresponding coil and (ii) a first central portion disposed within its corresponding coil, and wherein the second core portion of each core includes (i) a second peripheral portion disposed about a second portion of the periphery of its corresponding coil, (ii) a third peripheral portion disposed about a third portion of the periphery of its corresponding coil, and (iii) a second central portion disposed within its corresponding coil.

11. The flux machine of claim 10, wherein a first portion of each coil is surrounded (i) on a first side and a second side by the first peripheral portion of the first core portion of its core, and (ii) on a third side by the first central portion of the first core portion of its core.

12. The flux machine of claim 10, wherein a first portion of each coil is positioned between (i) the first peripheral portion of the first core portion of its core, and (ii) the first central portion of the first core portion of its core.

13. The flux machine of claim 1, wherein each core defines a first channel and a second channel, the first channel of each core being defined by only the first plurality of laminations of that core, the second channel of each core being defined by only the second plurality of laminations of that core.

14. The flux machine of claim 13, wherein a first portion of each coil is disposed in the first channel of its core such that the first portion of each coil is surrounded on three sides by the first plurality of laminations.

15. The flux machine of claim 14, wherein a second portion of each coil is disposed in the second channel of its core such that the second portion of each coil is surrounded on three sides by the second plurality of laminations.

## Patentansprüche

1. Flussmaschine (10), umfassend:
einen Stator (100) und einen Rotor (40, 70);
wobei einer von dem Stator und dem Rotor eine Vielzahl von elektrischen Kern-Spulen-Baugruppen (110) aufweist, wobei jede der Vielzahl von elektrischen Kern-Spulen-Baugruppen einen jeweiligen Kern (120) und eine entsprechende Spule (126), die um den jeweiligen Kern herum gewickelt ist, einschließt, wobei die Kern-Spulen-Baugruppen ausgerichtet sind, sodass der Strom der Spule primär in einer Ebene fließt, die zu einer Rotationsrichtung quer verläuft, wobei jeder Kern (120) aus einem ersten Kernabschnitt (122) und einem zweiten Kernabschnitt (124) ausgebildet ist, wobei der erste Kernabschnitt (122) eine erste Vielzahl von Lamellen einschließt, die in einer ersten Richtung gestapelt sind, wobei der zweite Kernabschnitt (124) eine zweite Vielzahl von Lamellen einschließt, die in einer zweiten Richtung grundsätzlich senkrecht zu der ersten Richtung gestapelt sind, wobei jeder Kern (120) getrennt und verschieden von all den anderen Kernen (120) der Vielzahl von elektrischen Kern-Spulen-Baugruppen ist;
wobei der andere von dem Stator und dem Rotor einen ersten Satz von Magneten (46, 76), einen zweiten Satz von Magneten (50) und einen dritten Satz von Magneten (46, 76) aufweist, wobei Polflächen des ersten Satzes von Magneten der Vielzahl von elektrischen Kern-Spulen-Baugruppen in einer ersten radialen Richtung zugewandt sind, Polflächen des zweiten Satzes von Magneten der Vielzahl von elektrischen Kern-Spulen-Baugruppen in einer axialen Richtung zugewandt sind und Polflächen des dritten Satzes von Magneten der Vielzahl von elektrischen Kern-Spulen-Baugruppen in einer zweiten radialen Richtung zugewandt sind, wobei die Sätze von Magneten derart eingerichtet sind, dass jede Kern-Spulen-Baugruppe (110) einem Magneten aus jedem Satz von Magneten zugewandt ist, wobei Magnete, die der gleichen Kern-Spulen-Baugruppe zugewandt sind, die gleiche Polarität aufweisen.

2. Flussmaschine nach Anspruch 1, wobei jede entsprechende Spule derart um mindestens einen Abschnitt des ersten Kernabschnitts und mindestens einen Abschnitt des zweiten Kernabschnitts herum gewickelt ist, dass die erste Vielzahl von Lamellen und die zweite Vielzahl von Lamellen beide mindestens teilweise innerhalb der entsprechenden Spule angeordnet sind.

3. Flussmaschine nach Anspruch 1, wobei die erste radiale Richtung und die zweite radiale Richtung jeweils grundsätzlich senkrecht zu der axialen Richtung sind.

4. Flussmaschine nach Anspruch 1, wobei die erste radiale Richtung grundsätzlich parallel zu der zweiten radialen Richtung ist.

5. Flussmaschine nach Anspruch 1, wobei, für den Kern jeder jeweiligen der Vielzahl von elektrischen Kern-Spulen-Baugruppen, die erste Vielzahl von Lamellen derart mit der zweiten Vielzahl von Lamellen gekoppelt ist, dass alle Lamellen der ersten Vielzahl von Lamellen eine identische der zweiten Vielzahl von Lamellen kontaktieren.

6. Flussmaschine nach Anspruch 1, wobei die erste Vielzahl von Lamellen jedes Kerns einen ersten Kanal definieren und wobei ein erster Abschnitt jeder Spule mindestens teilweise innerhalb des ersten Kanals ihres Kerns angeordnet ist.

7. Flussmaschine nach Anspruch 6, wobei die zweite Vielzahl von Lamellen jedes Kerns einen zweiten Kanal definieren und wobei ein zweiter Abschnitt jeder Spule mindestens teilweise innerhalb des zweiten Kanals ihres Kerns angeordnet ist.

8. Flussmaschine nach Anspruch 7, wobei die zweite Vielzahl von Lamellen jedes Kerns einen dritten Kanal definieren und wobei ein dritter Abschnitt jeder Spule mindestens teilweise innerhalb des dritten Kanals ihres Kerns angeordnet ist.

9. Flussmaschine nach Anspruch 8, wobei der erste Kanal, der durch die erste Vielzahl von Lamellen definiert ist, grundsätzlich senkrecht zu dem zweiten Kanal und dem dritten Kanal ist, die durch die zweite Vielzahl von Lamellen definiert sind.

10. Flussmaschine nach Anspruch 1, wobei der erste Kernabschnitt jedes Kerns (i) einen ersten Umfangsabschnitt, der um einen ersten Abschnitt eines Umfangs seiner entsprechenden Spule herum angeordnet ist, und (ii) einen ersten zentralen Abschnitt, der innerhalb seiner entsprechenden Spule angeordnet ist, einschließt und wobei der zweite Kernabschnitt jedes Kerns (i) einen zweiten Umfangsabschnitt, der um einen zweiten Abschnitt des Umfangs seiner entsprechenden Spule herum angeordnet ist, (ii) einen dritten Umfangsabschnitt, der um einen dritten Abschnitt des Umfangs seiner entsprechenden Spule herum angeordnet ist, und (iii) einen zweiten zentralen Abschnitt, der innerhalb seiner entsprechenden Spule angeordnet ist, einschließt.

11. Flussmaschine nach Anspruch 10, wobei ein erster Abschnitt jeder Spule (i) auf einer ersten Seite und einer zweiten Seite durch den ersten Umfangsabschnitt des ersten Kernabschnitts ihres Kerns und (ii) auf einer dritten Seite durch den ersten zentralen Abschnitt des ersten Kernabschnitts ihres Kerns umgeben ist.

12. Flussmaschine nach Anspruch 10, wobei ein erster Abschnitt jeder Spule zwischen (i) dem ersten Umfangsabschnitt des ersten Kernabschnitts ihres Kerns und (ii) dem ersten zentralen Abschnitt des ersten Kernabschnitts ihres Kerns positioniert ist.

13. Flussmaschine nach Anspruch 1, wobei jeder Kern einen ersten Kanal und einen zweiten Kanal definiert, wobei der erste Kanal jedes Kerns nur durch die erste Vielzahl von Lamellen dieses Kerns definiert ist, wobei der zweite Kanal jedes Kerns nur durch die zweite Vielzahl von Lamellen dieses Kerns definiert ist.

14. Flussmaschine nach Anspruch 13, wobei ein erster Abschnitt jeder Spule derart in dem ersten Kanal ihres Kerns angeordnet ist, dass der erste Abschnitt jeder Spule auf drei Seiten durch die erste Vielzahl von Lamellen umgeben ist.

15. Flussmaschine nach Anspruch 14, wobei ein zweiter Abschnitt jeder Spule derart in dem zweiten Kanal ihres Kerns angeordnet ist, dass der zweite Abschnitt jeder Spule auf drei Seiten durch die zweite Vielzahl von Lamellen umgeben ist.

## Revendications

1. Machine à flux (10) comprenant :
un stator (100) et un rotor (40, 70) ;
l'un du stator et du rotor ayant une pluralité d'ensembles noyau-bobine (110) électriques, chacun de la pluralité d'ensembles noyau-bobine électriques comportant un noyau (120) respectif et une bobine (126) correspondante enroulée autour du noyau respectif, dans laquelle les ensembles noyau-bobine sont orientés de sorte que le courant de la bobine circule principalement dans un plan qui est transversal à une direction de rotation, chaque noyau (120) étant formé d'une première partie de noyau (122) et d'une seconde partie de noyau (124), la première partie de noyau (122) comportant une première pluralité de tôles empilées dans une première direction, la seconde partie de noyau (124) comportant une seconde pluralité de tôles empilées dans une seconde direction généralement perpendiculaire à la première direction, chaque noyau (120) étant séparé et distinct de tous les autres noyaux (120) de la pluralité d'ensembles noyau-bobine électriques ;
l'autre du stator et du rotor ayant un premier ensemble d'aimants (46, 76), un deuxième ensemble d'aimants (50), et un troisième ensemble d'aimants (46, 76), des faces polaires du premier ensemble d'aimants faisant face à la pluralité d'ensembles noyau-bobine électriques dans une première direction radiale, des faces polaires du deuxième ensemble d'aimants faisant face à la pluralité d'ensembles noyau-bobine électriques dans une direction axiale, et des faces polaires du troisième ensemble d'aimants faisant face à la pluralité d'ensembles noyau-bobine électriques dans une seconde direction radiale, dans laquelle les ensembles d'aimants sont disposés de telle sorte que chaque ensemble noyau-bobine (110) fasse face à un aimant de chaque ensemble d'aimants, dans laquelle des aimants faisant face au même ensemble noyau-bobine ont la même polarité.

2. Machine à flux selon la revendication 1, dans laquelle chaque bobine correspondante est enroulée autour d'au moins une partie de la première partie de noyau et d'au moins une partie de la seconde partie de noyau, de telle sorte que la première pluralité de tôles et la seconde pluralité de tôles soient toutes deux, au moins partiellement, disposées à l'intérieur de la bobine correspondante.

3. Machine à flux selon la revendication 1, dans laquelle la première direction radiale et la seconde direction radiale sont chacune généralement perpendiculaires à la direction axiale.

4. Machine à flux selon la revendication 1, dans laquelle la première direction radiale est généralement parallèle à la seconde direction radiale.

5. Machine à flux selon la revendication 1, dans laquelle, pour le noyau de chaque ensemble respectif de la pluralité d'ensembles noyau-bobine électriques, la première pluralité de tôles sont couplées à la seconde pluralité de tôles de telle sorte que toutes les tôles de la première pluralité de tôles soient en contact avec une tôle identique de la seconde pluralité de tôles.

6. Machine à flux selon la revendication 1, dans laquelle la première pluralité de tôles de chaque noyau définissent un premier canal, et dans laquelle une première partie de chaque bobine est au moins partiellement disposée à l'intérieur du premier canal de son noyau.

7. Machine à flux selon la revendication 6, dans laquelle la seconde pluralité de tôles de chaque noyau définissent un deuxième canal, et dans laquelle une deuxième partie de chaque bobine est au moins partiellement disposée à l'intérieur du deuxième canal de son noyau.

8. Machine à flux selon la revendication 7, dans laquelle la seconde pluralité de tôles de chaque noyau définissent un troisième canal, et dans laquelle une troisième partie de chaque bobine est au moins partiellement disposée à l'intérieur du troisième canal de son noyau.

9. Machine à flux selon la revendication 8, dans laquelle le premier canal défini par la première pluralité de tôles est généralement perpendiculaire au deuxième canal et au troisième canal définis par la seconde pluralité de tôles.

10. Machine à flux selon la revendication 1, dans laquelle la première partie de noyau de chaque noyau comporte (i) une première partie périphérique disposée autour d'une première partie d'une périphérie de sa bobine correspondante et (ii) une première partie centrale disposée à l'intérieur de sa bobine correspondante, et dans laquelle la seconde partie de noyau de chaque noyau comporte (i) une deuxième partie périphérique disposée autour d'une deuxième partie de la périphérie de sa bobine correspondante, (ii) une troisième partie périphérique disposée autour d'une troisième partie de la périphérie de sa bobine correspondante, et (iii) une seconde partie centrale disposée à l'intérieur de sa bobine correspondante.

11. Machine à flux selon la revendication 10, dans laquelle une première partie de chaque bobine est entourée (i) sur un premier côté et un deuxième côté par la première partie périphérique de la première partie de noyau de son noyau, et (ii) sur un troisième côté par la première partie centrale de la première partie de noyau de son noyau.

12. Machine à flux selon la revendication 10, dans laquelle une première partie de chaque bobine est positionnée entre (i) la première partie périphérique de la première partie de noyau de son noyau, et (ii) la première partie centrale de la première partie de noyau de son noyau.

13. Machine à flux selon la revendication 1, dans laquelle chaque noyau définit un premier canal et un deuxième canal, le premier canal de chaque noyau étant défini uniquement par la première pluralité de tôles de ce noyau, le deuxième canal de chaque noyau étant défini uniquement par la seconde pluralité de tôles de ce noyau.

14. Machine à flux selon la revendication 13, dans laquelle une première partie de chaque bobine est disposée dans le premier canal de son noyau de telle sorte que la première partie de chaque bobine soit entourée sur trois côtés par la première pluralité de tôles.

15. Machine à flux selon la revendication 14, dans laquelle une deuxième partie de chaque bobine est disposée dans le deuxième canal de son noyau de telle sorte que la deuxième partie de chaque bobine soit entourée sur trois côtés par la seconde pluralité de tôles.
